# EUROPEAN PATENT APPLICATION

(11) **EP 4 633 207 A1**
(43) Date of publication of application: **15.10.2025**
(21) Application number: 23899712.6
(22) Date of filing: 14.11.2023
(51) Int. Cl.: H04W 4/08

(54) **MULTICAST GROUP ESTABLISHMENT METHOD, DEVICE AND APPARATUS, AND STORAGE MEDIUM**

(30) Priority: 06.12.2022 CN 202211559733
(71) Applicant: Datang Mobile Communications Equipment Co., Ltd., Beijing 100085 (CN)
(72) Inventor: LI, Yun, Beijing 100085 (CN)
(74) Representative: Studio Torta S.p.A.
(86) International application number: PCT/CN2023/131504
(87) International publication number: WO 2024/120132

(57) **Abstract**

Embodiments of the present disclosure provide a multicast group establishment method, device and apparatus, and a storage medium. The method comprises: a first terminal sends a first protocol data unit (PDU) session establishment request message, the first PDU session establishment request message comprising an application layer identifier of the first terminal and an application layer identifier of a second terminal, wherein the second terminal and the first terminal belong to a same virtual network (VN) group.

## Description

### CROSS-REFERENCES TO RELATED APPLICATIONS

The present application claims priority to Chinese patent application No. 202211559733.X filed on December 06, 2022, entitled "Multicast Group Establishment Method, Device and Apparatus, and Storage Medium", which is hereby incorporated by reference in its entirety.

### FIELD

The present application relates to the field of communications, and in particular, to methods and apparatuses for multicast group establishment, devices and a storage medium.

### BACKGROUND

Currently, multicast group establishment in a local area network (LAN) scenario of the 5th generation mobile communication (5G) is based on an application configuration, and requires a terminal (also known as a user equipment (UE)) to actively apply to join a target multicast group.

However, in some application scenarios, for example, in case that a large live broadcast notifies all registered conference users of a live conference-related message, a conference notification party, as a terminal, hopes to establish a multicast group, so that all registered conference users may receive live broadcast-related information. For this application scenario, a traditional 5G LAN does not have a solution for a procedure of establishing a multicast group within a virtual network (VN) group initiated by a group member terminal.

### BRIEF SUMMARY

In view of the problems existing in the related art, embodiments of the present application provide methods and apparatuses for multicast group establishment, devices and storage mediums.

An embodiment of the present application provides a method for multicast group establishment, performed by a first terminal, including:
sending a first protocol data unit (PDU) session establishment request message, where the first PDU session establishment request message includes an application layer identifier of the first terminal and an application layer identifier of a second terminal,
where the second terminal and the first terminal belong to a same virtual network (VN) group.

In some embodiments, after sending the first PDU session establishment request message, the method further includes:
receiving a first PDU session establishment complete message, where the first PDU session establishment complete message includes first information, and the first information is used to indicate whether a network allows the first terminal to establish a multicast group.

An embodiment of the present application further provides a method for multicast group establishment, performed by a session management function, including:
receiving a first create session management context request message sent from an access and mobility management function, where the first create session management context request message includes an application layer identifier of a first terminal and an application layer identifier of a second terminal, where the first terminal is a terminal that initiates establishment of a multicast group, and the second terminal and the first terminal belong to a same virtual network (VN) group; and
determining, based on the first create session management context request message, that whether the first terminal is allowed to establish a multicast group.

In some embodiments, determining that whether the first terminal is allowed to establish the multicast group based on the first create session management context request message includes:
querying, from a unified data management function, whether the first terminal is allowed to establish the multicast group based on the application layer identifier of the first terminal.

In some embodiments, in case of determining that the first terminal is allowed to establish the multicast group, the method further includes:
sending a first request message to the second terminal, where the first request message is used to request the second terminal to join a target multicast group, where the target multicast group is a multicast group initiated and established through the first terminal.

In some embodiments, the first request message includes the multicast address information of the target multicast group.

In some embodiments, after sending the first request message to the second terminal, the method further includes:
receiving a second create session management context request message or a first update session management context request message sent from an access and mobility management function, where the second create session management context request message or the first update session management context request message includes an application layer identifier of the second terminal and multicast address information of the target multicast group; and
determining, based on the second create session management context request message or the first update session management context request message, that whether the second terminal is allowed to join the target multicast group.

In some embodiments, determining, based on the second create session management context request message or the first update session management context request message, that whether the second terminal is allowed to join the target multicast group includes:
querying, from a unified data management function and/or a policy control function, whether the second terminal is allowed to join the target multicast group based on the second create session management context request message or the first update session management context request message.

In some embodiments, in case of determining that the second terminal is allowed to join the target multicast group, the method further includes:
sending a data matching and transferring rule of the target multicast group to a user plane function on a protocol data unit (PDU) session path of the second terminal.

In some embodiments, the method further includes:
sending a group level session modification request message to a user plane function on a protocol data unit (PDU) session path of the first terminal, where the group level session modification request message includes the data matching and transferring rule of the target multicast group.

In some embodiments, the method further includes:
sending a first PDU session establishment complete message to the first terminal, where the first PDU session establishment complete message includes first information, and the first information is used to indicate whether a network allows the first terminal to establish a multicast group.

In some embodiments, the method further includes:
sending a second PDU session establishment complete message to the second terminal, where the second PDU session establishment complete message includes second information, and the second information is used to indicate whether the second terminal successfully joins the target multicast group.

An embodiment of the present application further provides a method for multicast group establishment, performed by a second terminal, including:
receiving a first request message, where the first request message is used to request the second terminal to join a target multicast group, where the target multicast group is a multicast group initiated and established through a first terminal, and the first terminal and the second terminal belong to a same virtual network (VN) group; and
sending, based on the first request message, a second protocol data unit (PDU) session establishment request message or a first protocol data unit (PDU) session modification request message, where the second PDU session establishment request message or the first PDU session modification request message includes an application layer identifier of the second terminal and multicast address information of the target multicast group.

In some embodiments, the first request message includes the multicast address information of the target multicast group.

In some embodiments, after sending the second PDU session establishment request message, the method further includes:
receiving a second PDU session establishment complete message, where the second PDU session establishment complete message includes second information, where the second information is used to indicate whether the second terminal successfully joins the target multicast group.

An embodiment of the present application further provides a first terminal, including a memory, a transceiver and a processor, where the memory is used for storing a computer program, the transceiver is used for receiving and sending data under the control of the processor, and the processor is used for reading the computer program in the memory and performing the following operations:
sending a first protocol data unit (PDU) session establishment request message, where the first PDU session establishment request message includes an application layer identifier of the first terminal and an application layer identifier of a second terminal,
where the second terminal and the first terminal belong to a same virtual network (VN) group.

In some embodiments, after sending the first PDU session establishment request message, the operations further include:
receiving a first PDU session establishment complete message, where the first PDU session establishment complete message includes first information, and the first information is used to indicate whether a network allows the first terminal to establish a multicast group.

An embodiment of the present application further provides a session management function, including a memory, a transceiver and a processor,
where the memory is used for storing a computer program, the transceiver is used for receiving and sending data under the control of the processor, and the processor is used for reading the computer program in the memory and performing the following operations:
receiving a first create session management context request message sent from an access and mobility management function, where the first create session management context request message includes an application layer identifier of a first terminal and an application layer identifier of a second terminal, where the first terminal is a terminal that initiates establishment of a multicast group, and the second terminal and the first terminal belong to a same virtual network (VN) group; and
determining, based on the first create session management context request message, that whether the first terminal is allowed to establish a multicast group.

In some embodiments, determining that whether the first terminal is allowed to establish the multicast group based on the first create session management context request message includes:
querying, from a unified data management function, whether the first terminal is allowed to establish the multicast group based on the application layer identifier of the first terminal.

In some embodiments, in case of determining that the first terminal is allowed to establish the multicast group, the operations further include:
sending a first request message to the second terminal, where the first request message is used to request the second terminal to join a target multicast group, where the target multicast group is a multicast group initiated and established through the first terminal.

In some embodiments, the first request message includes the multicast address information of the target multicast group.

In some embodiments, after sending the first request message to the second terminal, the operations further include:
receiving a second create session management context request message or a first update session management context request message sent from an access and mobility management function, where the second create session management context request message or the first update session management context request message includes an application layer identifier of the second terminal and multicast address information of the target multicast group; and
determining, based on the second create session management context request message or the first update session management context request message, that whether the second terminal is allowed to join the target multicast group.

In some embodiments, determining, based on the second create session management context request message or the first update session management context request message, that whether the second terminal is allowed to join the target multicast group includes:
querying, from a unified data management function and/or a policy control function, whether the second terminal is allowed to join the target multicast group based on the second create session management context request message or the first update session management context request message.

In some embodiments, in case of determining that the second terminal is allowed to join the target multicast group, the operations further include:
sending a data matching and transferring rule of the target multicast group to a user plane function on a protocol data unit (PDU) session path of the second terminal.

In some embodiments, the operations further include:
sending a group level session modification request message to a user plane function on a protocol data unit (PDU) session path of the first terminal, where the group level session modification request message includes the data matching and transferring rule of the target multicast group.

In some embodiments, the operations further include:
sending a first PDU session establishment complete message to the first terminal, where the first PDU session establishment complete message includes first information, and the first information is used to indicate whether a network allows the first terminal to establish a multicast group.

In some embodiments, the operations further include:
sending a second PDU session establishment complete message to the second terminal, where the second PDU session establishment complete message includes second information, and the second information is used to indicate whether the second terminal successfully joins the target multicast group.

An embodiment of the present application further provides a second terminal, including a memory, a transceiver and a processor,
where the memory is used for storing a computer program, the transceiver is used for receiving and sending data under the control of the processor, and the processor is used for reading the computer program in the memory and performing the following operations:
receiving a first request message, where the first request message is used to request the second terminal to join a target multicast group, where the target multicast group is a multicast group initiated and established through a first terminal, and the first terminal and the second terminal belong to a same virtual network (VN) group; and
sending, based on the first request message, a second protocol data unit (PDU) session establishment request message or a first protocol data unit (PDU) session modification request message, where the second PDU session establishment request message or the first PDU session modification request message includes an application layer identifier of the second terminal and multicast address information of the target multicast group.

In some embodiments, the first request message includes the multicast address information of the target multicast group.

In some embodiments, after sending the second PDU session establishment request message, the operations further include:
receiving a second PDU session establishment complete message, where the second PDU session establishment complete message includes second information, where the second information is used to indicate whether the second terminal successfully joins the target multicast group.

An embodiment of the present application further provides an apparatus for multicast group establishment, including:
a first sending unit, used for sending a first protocol data unit (PDU) session establishment request message, where the first PDU session establishment request message includes an application layer identifier of a first terminal and an application layer identifier of a second terminal,
where the second terminal and the first terminal belong to a same virtual network (VN) group.

An embodiment of the present application further provides an apparatus for multicast group establishment, including:
a second receiving unit, used for receiving a first create session management context request message sent from an access and mobility management function, where the first create session management context request message includes an application layer identifier of a first terminal and an application layer identifier of a second terminal, where the first terminal is a terminal that initiates establishment of a multicast group, and the second terminal and the first terminal belong to a same virtual network (VN) group; and
a determining unit, used for determining, based on the first create session management context request message, that whether the first terminal is allowed to establish a multicast group.

An embodiment of the present application further provides an apparatus for multicast group establishment, including:
a third receiving unit, used for receiving a first request message, where the first request message is used to request a second terminal to join a target multicast group, where the target multicast group is a multicast group initiated and established through a first terminal, and the first terminal and the second terminal belong to a same virtual network (VN) group; and
a third sending unit, used for sending, based on the first request message, a second protocol data unit (PDU) session establishment request message or a first protocol data unit (PDU) session modification request message, where the second PDU session establishment request message or the first PDU session modification request message includes an application layer identifier of the second terminal and multicast address information of the target multicast group.

An embodiment of the present application further provides a computer-readable storage medium, where the computer-readable storage medium stores a computer program, and the computer program is used to cause a computer to perform the above-mentioned method for multicast group establishment method performed by a first terminal, or perform the above-mentioned method for multicast group establishment method performed by a session management function, or perform the above-mentioned method for multicast group establishment method performed by a second terminal.

An embodiment of the present application further provides a communication device, where the communication device stores a computer program, and the computer program is used to cause the communication device to perform the above-mentioned method for multicast group establishment method performed by a first terminal, or perform the above-mentioned method for multicast group establishment method performed by a session management function, or perform the above-mentioned method for multicast group establishment method performed by a second terminal.

An embodiment of the present application further provides a processor-readable storage medium, where the processor-readable storage medium stores a computer program, and the computer program is used to cause a processor to perform the above-mentioned method for multicast group establishment method performed by a first terminal, or perform the above-mentioned method for multicast group establishment method performed by a session management function, or perform the above-mentioned method for multicast group establishment method performed by a second terminal.

An embodiment of the present application further provides a chip product, where the chip product stores a computer program, and the computer program is used to cause the chip product to perform the above-mentioned method for multicast group establishment method performed by a first terminal, or perform the above-mentioned method for multicast group establishment method performed by a session management function, or perform the above-mentioned method for multicast group establishment method performed by a second terminal.

In the methods and apparatuses for multicast group establishment, devices, and storage mediums provided by the embodiments of the present application, a terminal application layer identifier of a multicast group that the terminal wants to establish is carried by the terminal when initiating a PDU session establishment request, a procedure of establishing the multicast group initiated by the terminal is implemented, the method for multicast group establishment is simplified, and signaling interaction is reduced.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a terminal transporting multicast data within a multicast group according to the related art;
FIG. 2 is a schematic flowchart of a terminal requesting to join a multicast group according to the related art;
FIG. 3 is a first schematic flowchart of a method for multicast group establishment according to an embodiment of the present application;
FIG. 4 is a second schematic flowchart of a method for multicast group establishment according to an embodiment of the present application;
FIG. 5 is a third schematic flowchart of a method for multicast group establishment according to an embodiment of the present application;
FIG. 6 is a flowchart of a terminal establishing a protocol data unit (PDU) session and a multicast group according to an embodiment of the present application;
FIG. 7 is a first flowchart of a terminal joining a multicast group according to an embodiment of the present application;
FIG. 8 is a second flowchart of a terminal joining a multicast group according to an embodiment of the present application;
FIG. 9 is a schematic structural diagram of a first terminal according to an embodiment of the present application;
FIG. 10 is a schematic structural diagram of a session management function according to an embodiment of the present application;
FIG. 11 is a schematic structural diagram of a second terminal according to an embodiment of the present application;
FIG. 12 is a first schematic structural diagram of an apparatus for multicast group establishment according to an embodiment of the present application;
FIG. 13 is a second schematic structural diagram of an apparatus for multicast group establishment according to an embodiment of the present application; and
FIG. 14 is a third schematic structural diagram of an apparatus for multicast group establishment according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in embodiments of the present application refers to two or more than two, and other quantifiers are similar thereto.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

To more clearly understand the solutions of embodiments of the present application, some contents related to the embodiments of the present application are first introduced.

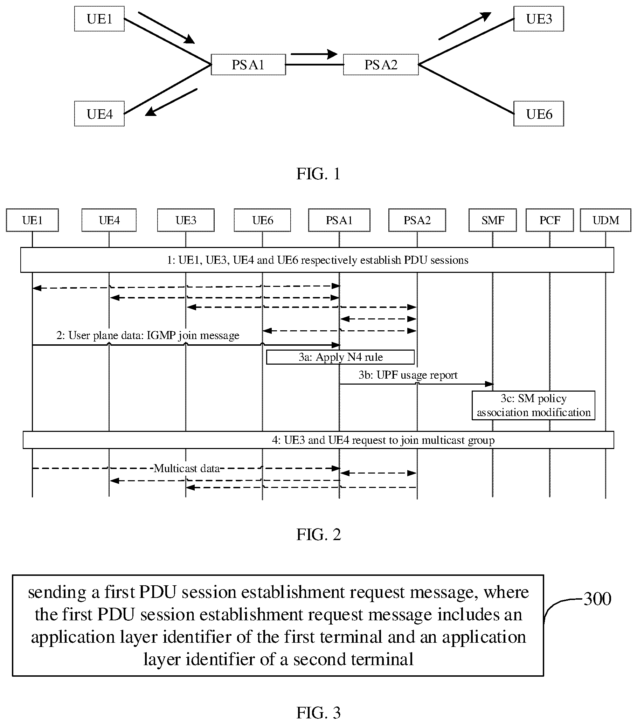

FIG. 1 is a schematic diagram of a terminal transporting multicast data within a multicast group according to the related art. As shown in FIG. 1, user equipment 1 (UE1), UE3, UE4 and UE6 belong to a same virtual network (VN) group, where UE1, UE3 and UE4 belong to a same multicast group in the VN group. Protocol data unit (PDU) session anchor 1 (PSA1) is a PSA corresponding to a PDU session between UE1 and UE4, and PSA2 is a PSA corresponding to a PDU session between UE3 and UE6. UE1 sends multicast data to UE4 via PSA1, and sends multicast data to UE3 via PSA1 and PSA2. A procedure of UE1, UE3 and UE4 joining a multicast group is shown in FIG. 2.

FIG. 2 is a schematic flowchart of a terminal requesting to join a multicast group according to the related art. As shown in FIG. 2, a procedure of UE1, UE3 and UE4 requesting to join the multicast group includes the following steps.

Step 1: group members UE1, UE3, UE4 and UE6 respectively establish PDU sessions to a same data network name (DNN) and a single network slice selection assistance information (S-NSSAI).
a. A session management function (SMF) issues a following user plane rule to a PSA when a PDU session is established: the SMF sets a usage reporting rule (URR) reporting trigger with a relevant value of "Internet protocol (IP) multicast join/leave".
b. A policy control function (PCF) issues a policy control request trigger to the SMF, that is, "a UE joins a multicast group".

Step 2: UE1 uses a user plane of the PDU session to send an Internet group management protocol (IGMP) join message to its PSA1.

Step 3a: after PSA1 receives the IGMP join message, PSA1 processes the message based on an N4 rule in the PDU session:
in case that IP multicast address information included in the IGMP allows access through the PDU session, PSA1 adds the PDU session to requested multicast;
in case that the SMF issues a URR to PSA1, PSA1 notifies the SMF that UE1 joins a multicast group and carries the IP multicast address information to SMF; or
in case that IP multicast address information included in the IGMP does not allow access through the PDU session, PSA1 will not add the PDU session to a multicast group.

Step 3b: PSA1 reports "IP multicast join" to the SMF based on the URR.

Step 3c: the SMF triggers a session management (SM) policy modification procedure to the PCF.

Step 4: UE3 and UE4 request to join the multicast group. The steps are the same as the above step 2 to step 3.

Currently, multicast group establishment in a local area network (LAN) scenario of the 5th generation mobile communication (5G) is based on application configuration, and a UE needs to actively apply to join a target multicast group. However, in some application scenarios, for example, in case that a large live broadcast notifies all registered conference users of a live conference-related message, the UE needs to join the multicast group where the conference is located to receive relevant information about conference live broadcast. In similar scenarios mentioned above, a method that requires a UE to initiate a procedure of establishing a multicast group is not perfect. For example, the conference notification party, as a UE, hopes to establish a multicast group to complete sending of live broadcast-related information to all registered conference users.

In response to there is no related solution in the related art for multicast group establishment procedure within a VN group that is not actively initiated by a group member UE, embodiments of the present application provide methods and apparatuses for multicast group establishment, devices and a storage medium, which may establish a multicast group initiated by a UE during a PDU session establishment procedure.

For example, although a 5G LAN scenario is used as an example for description in the present application, this is not limited, and other traditional or future similar scenarios known to those skilled in the art may also apply solutions described in the present application, and no limitation is made herein.

FIG. 3 is a first schematic flowchart of a method for multicast group establishment according to an embodiment of the present application. The method is performed by a first terminal. As shown in FIG. 3, the method includes the following steps.

Step 300: sending a first protocol data unit (PDU) session establishment request message, where the first PDU session establishment request message includes an application layer identifier of the first terminal and an application layer identifier of a second terminal.

The second terminal and the first terminal belong to a same virtual network (VN) group.

In some embodiments, the first terminal is any terminal that initiates establishment of a multicast group, and the second terminal is a member terminal that the first terminal invites to join the multicast group. The first terminal and the second terminal belong to the same VN group. The second terminal may include one or more terminals.

In case that the first terminal needs to initiate establishment of a multicast group, the first terminal may carry the application layer identifier of the first terminal and the application layer identifier of the second terminal in its PDU session establishment request message (that is, PDU session establishment request). Therefore, a network side may decide that whether the first terminal is allowed to establish a multicast group including the second terminal based on the application layer identifier of the first terminal and the application layer identifier of the second terminal.

In some embodiments, the application layer identifier of the terminal may be a generic public subscription identifier (GPSI).

In the method for multicast group establishment provided by the embodiment of the present application, an application layer identifier of the terminal wants to establish a multicast group is carried in a PDU session establishment request message (that is, PDU session establishment request) initiated by the terminal, a procedure of establishing the multicast group initiated by the terminal is implemented, the method for multicast group establishment is simplified, and signaling interaction is reduced.

In some embodiments, after sending the first PDU session establishment request message, the method further includes:
receiving a first PDU session establishment complete message, where the first PDU session establishment complete message includes first information, and the first information is used to indicate whether a network allows the first terminal to establish a multicast group.

In some embodiments, after the first terminal sends the first PDU session establishment request message, the network side may decide that whether the first terminal is allowed to establish a multicast group including the second terminal based on the application layer identifier of the first terminal and the application layer identifier of the second terminal, and send the first PDU session establishment complete message (that is, PDU session establishment accept) to the first terminal. The first PDU session establishment complete message includes the first information, to indicate whether the network allows the first terminal to establish a multicast group.

After receiving the first PDU session establishment complete message, the first terminal may know whether it is allowed to establish a multicast group, and then corresponding subsequent procedure may be performed.

In an embodiment, the first terminal sends the first PDU session establishment request message to an access and mobility management function (AMF). After receiving the first PDU session establishment request message, the AMF may carry the application layer identifier of the first terminal and the application layer identifier of the second terminal in a first create session management context request message (that is, Nsmf PDU Session CreateSMContext Request) and send it to an SMF. After receiving the first create session management context request message, the SMF may determine whether the first terminal is allowed to establish a multicast group based on the first create session management context request message, and carry the first information in the first PDU session establishment complete message sent to the first terminal, to indicate whether the first terminal is allowed to establish a multicast group.

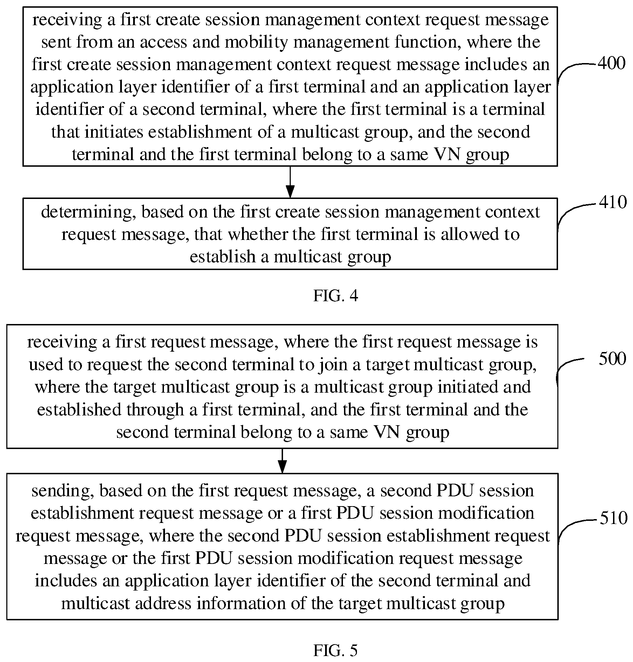

FIG. 4 is a second schematic flowchart of a method for multicast group establishment according to an embodiment of the present application. The method is performed by a session management function. As shown in FIG. 4, the method includes the following steps:

Step 400: receiving a first create session management context request message sent from an access and mobility management function, where the first create session management context request message includes an application layer identifier of a first terminal and an application layer identifier of a second terminal, where the first terminal is a terminal that initiates establishment of a multicast group, and the second terminal and the first terminal belong to a same virtual network (VN) group.

Step 410: determining, based on the first create session management context request message, that whether the first terminal is allowed to establish a multicast group.

In some embodiments, the session management function described in the present application includes an SMF in a 5G network system, or a network function with similar functions to an SMF in a future network system (such as a sixth generation (6G)).

The access and mobility management function includes an AMF in a 5G network system, or a network function with similar functions to an AMF in a future network system (such as 6G).

The first terminal is any terminal that initiates establishment of a multicast group, and the second terminal is a member terminal that the first terminal invites to join the multicast group. The first terminal and the second terminal belong to the same VN group. The second terminal may include one or more terminals.

In case that the first terminal needs to initiate establishment of a multicast group, the first terminal may carry the application layer identifier of the first terminal and the application layer identifier of the second terminal in its PDU session establishment request message (that is, PDU session establishment request). In some embodiments, the application layer identifier of the terminal may be a GPSI.

In an embodiment, the first terminal may send the first PDU session establishment request message to the access and mobility management function. After receiving the first PDU session establishment request message, the access and mobility management function may carry the application layer identifier of the first terminal and the application layer identifier of the second terminal in a first create session management context request message (i.e., Nsmf PDU Session CreateSMContext Request) and send it to the session management function. After receiving the first create session management context request message, the session management function may determine whether the first terminal is allowed to establish a multicast group based on the first create session management context request message.

In the method for multicast group establishment provided by the embodiment of the present application, whether the terminal is allowed to establish a multicast group may be determined based on the application layer identifier of a terminal carried in the PDU session establishment request initiated by the terminal. The terminal is supported to initiate establishment of a multicast group, the establishment way of the multicast group is simplified, and signaling interaction is reduced.

In some embodiments, determining that whether the first terminal is allowed to establish the multicast group based on the first create session management context request message includes:
querying, from a unified data management function, whether the first terminal is allowed to establish the multicast group based on the application layer identifier of the first terminal.

In some embodiments, the unified data management function described in the present application includes a unified data management (UDM) in a 5G network system, or a network function with similar functions to a UDM in a future network system (such as 6G).

After receiving the first create session management context request message, the session management function may interact with the unified data management function and query the unified data management function for terminal information that may initiate establishment of a multicast group through the application layer identifier of the first terminal, to determine whether the first terminal is allowed to establish a multicast group.

In some embodiments, an application function may pre-configure the terminal information in a relevant VN group that may initiate establishment of a multicast group to the unified data management function, a policy control function, etc.

In some embodiments, in case of determining that the first terminal is allowed to establish the multicast group, the method further includes:
sending a first request message to the second terminal, where the first request message is used to request the second terminal to join a target multicast group, where the target multicast group is a multicast group initiated and established through the first terminal.

In some embodiments, after determining that the first terminal is allowed to establish a multicast group, the session management function may send the first request message to the second terminal, to request the second terminal to join the multicast group established by the first terminal.

In an embodiment, the session management function may send the first request message to the second terminal via the access and mobility management function and a network device (such as a base station).

In some embodiments, the first request message may include multicast address information of the target multicast group.

Regarding the multicast address information of the target multicast group, after the session management function determines that the first terminal is allowed to establish a multicast group, a multicast address may be allocated to the multicast group. Alternatively, the session management function may determine the multicast address information of the target multicast group based on a configuration of the application function, for example, the application function pre-configures multicast address information of the multicast group established by the first terminal to the unified data management function, and the session management function may query the unified data management function for the multicast address information of the target multicast group when needed. Alternatively, the multicast address information of the target multicast group may be configured in the first terminal before or after the first terminal establishes the PDU session, such as the multicast address information of the target multicast group is pre-configured in the first terminal, and the first terminal may carry the multicast address information in a message for initiating the PDU session establishment request and send it to the session management function.

In some embodiments, after sending the first request message to the second terminal, the method further includes:
receiving a second create session management context request message or a first update session management context request message sent from an access and mobility management function, where the second create session management context request message or the first update session management context request message includes an application layer identifier of the second terminal and multicast address information of the target multicast group; and
determining, based on the second create session management context request message or the first update session management context request message, that whether the second terminal is allowed to join the target multicast group.

In an embodiment, when the second terminal receives the first request message, in case that the PDU session has not been established, the second terminal may initiate a PDU session establishment request, which carries the application layer identifier of the second terminal and the multicast address information of the target multicast group, for requesting to join the target multicast group.

In some embodiments, the multicast address information of the target multicast group may be sent to the second terminal by the session management function, or may be pre-configured in the second terminal.

After receiving the PDU session establishment request initiated by the second terminal, the access and mobility management function may send a second create session management context request message (i.e., Nsmf PDU Session CreateSMContext Request) to the session management function. The second create session management context request message includes the application layer identifier of the second terminal and the multicast address information of the target multicast group.

After receiving the second create session management context request message, the session management function may determine that whether the second terminal is allowed to join the target multicast group based on the second create session management context request message.

In an embodiment, when the second terminal receives the first request message, in case that a PDU session has been established, the second terminal may initiate a PDU session modification request. The PDU session modification request carries the application layer identifier of the second terminal and the multicast address information of the target multicast group, for requesting to join the target multicast group.

After receiving the PDU session establishment request initiated by the second terminal, the access and mobility management function may send a first update session management context request message (i.e., Nsmf PDU Session_UpdateSMContext Request) to the session management function. The first update session management context request message includes the application layer identifier of the second terminal and the multicast address information of the target multicast group.

After receiving the first update session management context request message, the session management function may determine that whether the second terminal is allowed to join the target multicast group based on the first update session management context request message.

In some embodiments, determining, based on the second create session management context request message or the first update session management context request message, that whether the second terminal is allowed to join the target multicast group includes:
querying, from a unified data management function and/or a policy control function, whether the second terminal is allowed to join the target multicast group based on the second create session management context request message or the first update session management context request message.

In some embodiments, the policy control function described in the present application includes a PCF in a 5G network system, or a network function with similar functions to a PCF in a future network system (such as 6G).

After receiving the second create session management context request message or the first update session management context request message, the session management function may interact with the unified data management function and/or the policy control function to determine that whether the second terminal is allowed to join the target multicast group.

In some embodiments, the session management function may query the unified data management function for configuration information of the second terminal or information of a terminal allowed to join the target multicast group (which may be configured to the unified data management function from the application function), to determine whether the second terminal is allowed to join the target multicast group.

In some embodiments, when obtaining session management related policy information from the policy control function, the session management function may determine whether the second terminal is allowed to join the target multicast group based on information, obtained by the policy control function, about whether the second terminal is allowed to join the multicast group.

In some embodiments, in case of determining that the second terminal is allowed to join the target multicast group, the method further includes:
sending a data matching and transferring rule of the target multicast group to a user plane function on a protocol data unit (PDU) session path of the second terminal.

In some embodiments, the user plane function described in the present application includes a UPF in a 5G network system, or a network function with similar functions to a UPF in a future network system (such as 6G).

In case that the session management function determines that the second terminal is allowed to join the target multicast group, a user plane matching and transferring rule may be issued for the PDU session of the second terminal, and a data matching and transferring rule about the target multicast group is sent to the user plane function on the PDU session path of the second terminal. For example, in case that a data packet with a destination address of the multicast address of the target multicast group is received, the data packet is transferred to the second terminal.

In some embodiments, the method further includes:
sending a group level session modification request message to a user plane function on a protocol data unit (PDU) session path of the first terminal, where the group level session modification request message includes the data matching and transferring rule of the target multicast group.

In some embodiments, in case that the session management function determines that the second terminal is allowed to join the target multicast group, the session management function may also send the corresponding data matching and transferring rule about the target multicast group to the user plane function on a protocol data unit (PDU) session path of the first terminal through a group level session modification request message (such as a group level N4 session modification).

In some embodiments, the method further includes:
sending a first PDU session establishment complete message to the first terminal, where the first PDU session establishment complete message includes first information, and the first information is used to indicate whether a network allows the first terminal to establish a multicast group.

In some embodiments, after the session management function receives the PDU session establishment request initiated by the first terminal and determines whether the first terminal is allowed to establish a multicast group, the first information may be carried in the first PDU session establishment complete message (that is, PDU session establishment accept) sent to the first terminal, to indicate whether the first terminal is allowed to establish a multicast group.

In some embodiments, the method further includes:
sending a second PDU session establishment complete message to the second terminal, where the second PDU session establishment complete message includes second information, and the second information is used to indicate whether the second terminal successfully joins the target multicast group.

In some embodiments, after the session management function receives the PDU session establishment request initiated by the second terminal and determines whether the second terminal is allowed to join the target multicast group, the second information may be carried in the second PDU session establishment complete message (that is, PDU session establishment accept) sent to the second terminal, to indicate whether the second terminal has successfully joined the target multicast group.

FIG. 5 is a third schematic flowchart of a method for multicast group establishment according to an embodiment of the present application. The method is performed by a second terminal. As shown in FIG. 5, the method includes the following steps.

Step 500: receiving a first request message, where the first request message is used to request the second terminal to join a target multicast group, where the target multicast group is a multicast group initiated and established through a first terminal, and the first terminal and the second terminal belong to a same virtual network (VN) group.

Step 510: sending, based on the first request message, a second protocol data unit (PDU) session establishment request message or a first protocol data unit (PDU) session modification request message, where the second PDU session establishment request message or the first PDU session modification request message includes an application layer identifier of the second terminal and multicast address information of the target multicast group.

In some embodiments, the first terminal is any terminal that initiates establishment of a multicast group, and the second terminal is a member terminal that the first terminal invites to join the multicast group. The first terminal and the second terminal belong to the same VN group. The second terminal may include one or more terminals.

In case that the first terminal needs to initiate establishment of a multicast group, the first terminal may carry the application layer identifier of the first terminal and the application layer identifier of the second terminal in its PDU session establishment request message (that is, PDU session establishment request). In some embodiments, the application layer identifier of the terminal may be a GPSI.

The first terminal may send the first PDU session establishment request message to the access and mobility management function. After receiving the first PDU session establishment request message, the access and mobility management function may carry the application layer identifier of the first terminal and the application layer identifier of the second terminal in a first create session management context request message (i.e., Nsmf PDU Session CreateSMContext Request) and send it to the session management function. After receiving the first create session management context request message, the session management function may determine whether the first terminal is allowed to establish a multicast group based on the first create session management context request message.

After determining that the first terminal is allowed to establish a multicast group, the session management function may send the first request message to the second terminal, to request the second terminal to join the multicast group established by the first terminal.

In some embodiments, the session management function may send the first request message to the second terminal via the access and mobility management function and a network device (such as a base station).

In some embodiments, the first request message may include multicast address information of the target multicast group.

In an embodiment, when the second terminal receives the first request message, in case that the PDU session has not been established, the second terminal may initiate a PDU session establishment request, which carries the application layer identifier of the second terminal and the multicast address information of the target multicast group, for requesting to join the target multicast group.

In some embodiments, the multicast address information of the target multicast group may be sent to the second terminal by the session management function, or may be pre-configured in the second terminal.

After receiving the PDU session establishment request initiated by the second terminal, the access and mobility management function may send a second create session management context request message (i.e., Nsmf PDU Session CreateSMContext Request) to the session management function. The second create session management context request message includes the application layer identifier of the second terminal and the multicast address information of the target multicast group.

After receiving the second create session management context request message, the session management function may determine that whether the second terminal is allowed to join the target multicast group based on the second create session management context request message.

In an embodiment, when the second terminal receives the first request message, in case that a PDU session has been established, the second terminal may initiate a PDU session modification request. The PDU session modification request carries the application layer identifier of the second terminal and the multicast address information of the target multicast group, for requesting to join the target multicast group.

In some embodiments, the multicast address information of the target multicast group may be sent to the second terminal by the session management function, or may be pre-configured in the second terminal.

After receiving the PDU session establishment request initiated by the second terminal, the access and mobility management function may send a first update session management context request message (i.e., Nsmf PDU Session_UpdateSMContext Request) to the session management function. The first update session management context request message includes the application layer identifier of the second terminal and the multicast address information of the target multicast group.

After receiving the first update session management context request message, the session management function may determine that whether the second terminal is allowed to join the target multicast group based on the first update session management context request message.

In the method for multicast group establishment provided by the embodiment of the present application, after receiving a request to join the multicast group sent from the session management function, the terminal joins the multicast group by creating or modifying a PDU session request. A procedure of establishing the multicast group initiated by the terminal is implemented, the method for multicast group establishment is simplified, and signaling interaction is reduced.

In some embodiments, after sending the second PDU session establishment request message, the method further includes:
receiving a second PDU session establishment complete message, where the second PDU session establishment complete message includes second information, where the second information is used to indicate whether the second terminal successfully joins the target multicast group.

In some embodiments, after the session management function receives the PDU session establishment request initiated by the second terminal and determines whether the second terminal is allowed to join the target multicast group, the second information may be carried in the second PDU session establishment complete message (that is, PDU session establishment accept) sent to the second terminal, to indicate whether the second terminal has successfully joined the target multicast group.

The methods provided by various embodiments of the present application are based on the same application concept, and implementation of each method may refer to each other, and the repetition will not be repeated.

The methods provided by the above embodiments of the present application are illustrated below by using embodiments in specific application scenarios.

Embodiment 1: UE1 establishes a PDU session and a multicast group.

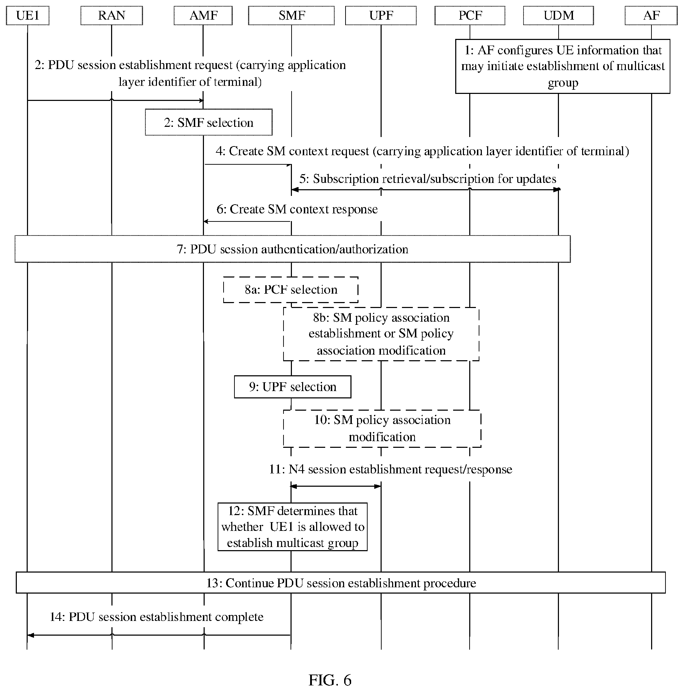

FIG. 6 is a flowchart of a terminal establishing a protocol data unit (PDU) session and a multicast group according to an embodiment of the present application. As shown in FIG. 6, UE1 requests to establish a multicast group including UE2 and UE3 while establishing a PDU session, and the main procedure includes the following steps.
1: An application function (AF) configures UE information that may initiate establishment of a multicast group in a relevant VN group.
2: UE1 sends a PDU session establishment request, which carries application layer identifier of UE1 itself and an application layer identifier of members of a same VN group with which UE1 wants to establish a multicast group, such as a GPSI.
3: An access and mobility management function (AMF) selects a session management function (SMF).
4: During a session establishment procedure, the AMF transfers, to the SMF, the application layer identifier of UE1 and the application layer identifier of members of the same VN group with which UE1 wants to establish a multicast group.
5: The SMF interacts with a unified data management (UDM) to obtain SM-related contract information, and configuration information about whether UE1 configured by the AF may initiate establishment of a multicast group, and subscribe information update.
6: The SMF sends a create session management context response message to the AMF.
7: PDU session authentication/authorization is performed.
8a: The SMF selects a policy control function (PCF).
8b: The SMF initiates a session management policy association establishment or session management policy association modification procedure.
9: The SMF selects a user plane function (UPF).
10: The SMF initiates the session management policy association modification procedure.
11: The SMF interacts with the UPF (N4 session establishment request/response).
12: The SMF determines whether a current UE1 is allowed to establish a multicast group based on the information in step 4 and step 5.

In case that it is not allowed: the SMF continues to perform step 13 to step 14 related to other session establishment, and carries, in a PDU session establishment accept message, an identifier indicating that multicast group establishment is not allowed.

In case that it is allowed: the SMF determines whether multicast group target members UE2 and UE3 have established a PDU session.
a: In case that UE2 or UE3 has not established a PDU session yet, embodiment 2 may be referred.
b: In case that UE2 or UE3 has established a PDU session, embodiment 3 may be referred.

Note: a multicast address of the multicast group initiated by UE1 is as follows.
a: The SMF may allocate a multicast address to the multicast group in this step.
b: The multicast address of the multicast group may be configured based on AF.
c: The multicast address of the multicast group may be configured in UE1 before or after UE1 establishes the PDU session.

13: A PDU session establishment procedure is continued.

14: The network sends a PDU Session establishment accept message to the UE through the SMF, which carries identification information about whether UE1 is allowed to establish a multicast group.

Embodiment 2: UE2 or UE3 has not established a PDU session.

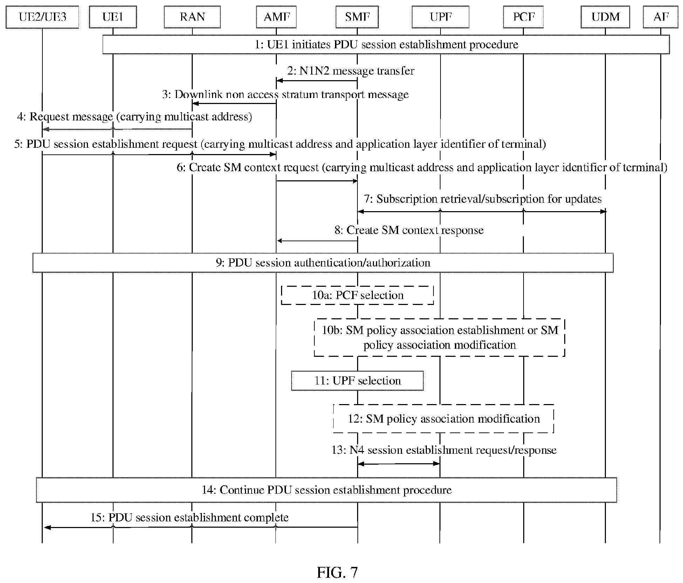

FIG. 7 is a first flowchart of a terminal joining a multicast group according to an embodiment of the present application. As shown in FIG. 7, in case that UE2 or UE3 has not establish a PDU session, UE2 or UE3 joins the multicast group established by UE1, and the main procedure includes the following steps.
1: The procedure of UE1 initiating establishment of the PDU session in embodiment 1 is referred to.
2 to 4: A session management function (SMF) sends a message to UE2/UE3 through an access and mobility management function (AMF), which carries a multicast address of the multicast group established by the session of UE1.
5 to 6: UE2/UE3 initiates a PDU session establishment request, which carries the multicast address received by UE2/UE3.
Note: A multicast address of UE2/UE3 may also come from a configuration before UE2/UE3 establishes a session.
7: The SMF obtains, from a unified data management (UDM), configuration information about whether UE2/UE3 joins a multicast group. (Optional)
8: The SMF sends a create session management context response message to the AMF.
9: PDU session authentication/authorization is performed.
10a: The SMF selects a policy control function (PCF).
10b: In case that the SMF obtains SM-related policy information from the PCF, the SMF may perform determination based on information of the PCF about whether the UE is allowed to join the multicast group. (Optional)
11: The SMF selects a user plane function (UPF).
12. The SMF initiates session management policy association modification.
13: In case that the SMF issues user plane matching and transferring rule for this session, a matching and transferring rule of a relevant multicast group is carried. For example, in case that the received destination address is the above multicast address, the destination address is transferred to UE2/UE3.
14: A PDU session establishment procedure is continued.
15: The network adds an identifier about whether UE2/UE3 has successfully joined the multicast group to the PDU session establishment accept message through the SMF.

Embodiment 3: UE2 or UE3 has established a PDU session.

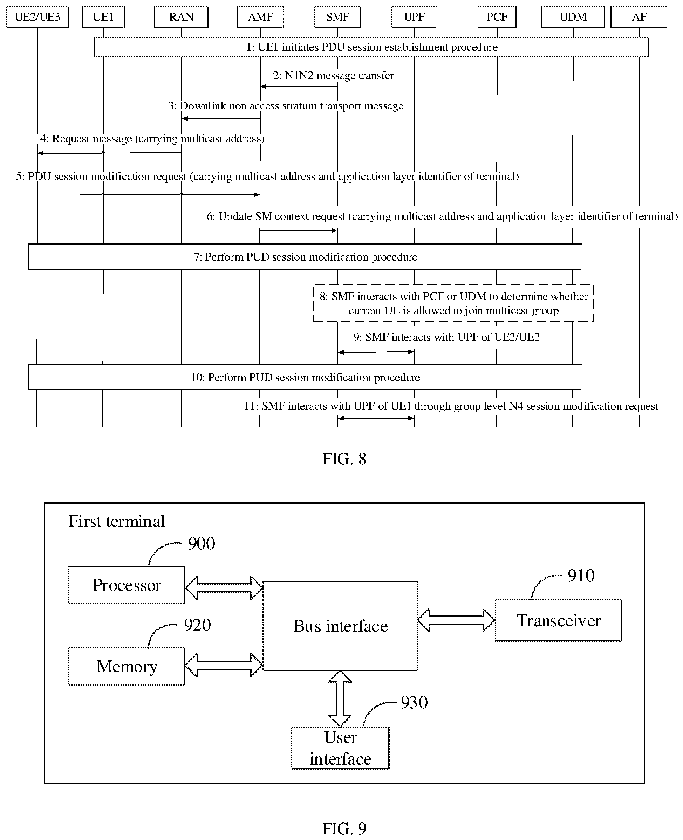

FIG. 8 is a second flowchart of a terminal joining a multicast group according to an embodiment of the present application. As shown in FIG. 8, in case that UE2 or UE3 has established a PDU session, UE2 or UE3 joins the multicast group established by UE1, and the main procedure includes the following steps.
1: The procedure of UE1 initiating establishment of the PDU session in embodiment 1 is referred to.
2-4: A session management function (SMF) sends a message to UE2/UE3 through an access and mobility management function (AMF), which carries a multicast address of the multicast group established by UE1.
5-6: UE2/UE3 notifies the SMF of the received multicast address and an application layer identifier of UE2/UE3 itself.
7: A PDU session modification procedure is performed.
8: The SMF interacts with a policy management function (PCF)/a unified data management (UDM) to determine whether a current UE is allowed to join the multicast group.
9: SMF interacts with a user plane function (UPF) on a PDU session path of UE2/UE3 to add a matching and transferring rule on data of the multicast group.
10: The PDU session modification procedure is performed.
11: The SMF issues the matching and transferring rules on the data of the multicast group to the UPF on the PDU session path of UE1 in the same multicast group through a group level N4 session modification request.

The methods and apparatuses provided by the various embodiments of the present application are based on the same application concept. Since the methods and apparatuses solve problems based on similar principles, implementation of the apparatuses and methods may refer to each other, and the repetition will not be repeated.

FIG. 9 is a schematic structural diagram of a first terminal according to an embodiment of the present application. As shown in FIG. 9, the first terminal includes a memory 920, a transceiver 910, and a processor 900. The processor 900 and the memory 920 may also be physically arranged separately.

The memory 920 is used for storing a computer program, and the transceiver 910 is used for sending and receiving data under control of the processor 900.

In some embodiments, the transceiver 910 is used for sending and receiving data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, units for providing communication with various other devices over transmission media including wireless channels, wired channels, fiber optic cables, and the like. For different user devices, a user interface 930 may also be an interface capable of externally or internally connecting required devices, and the connected devices include but are not limited to a small keypad, a display, a speaker, a microphone, a joystick, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field programmable gate array (FPGA), or a complex programmable logic device (CPLD), and the processor may also adopt a multi-core architecture.

The processor 900 is used to perform any of the methods provided by the embodiments of the present application based on an obtained executable instruction by calling the computer program stored in the memory 920, for example: sending a first protocol data unit (PDU) session establishment request message, where the first PDU session establishment request message includes an application layer identifier of the first terminal and an application layer identifier of a second terminal,
where the second terminal and the first terminal belong to a same virtual network (VN) group.

In some embodiments, after sending the first PDU session establishment request message, the method further includes:
receiving a first PDU session establishment complete message, where the first PDU session establishment complete message includes first information, and the first information is used to indicate whether a network allows the first terminal to establish a multicast group.

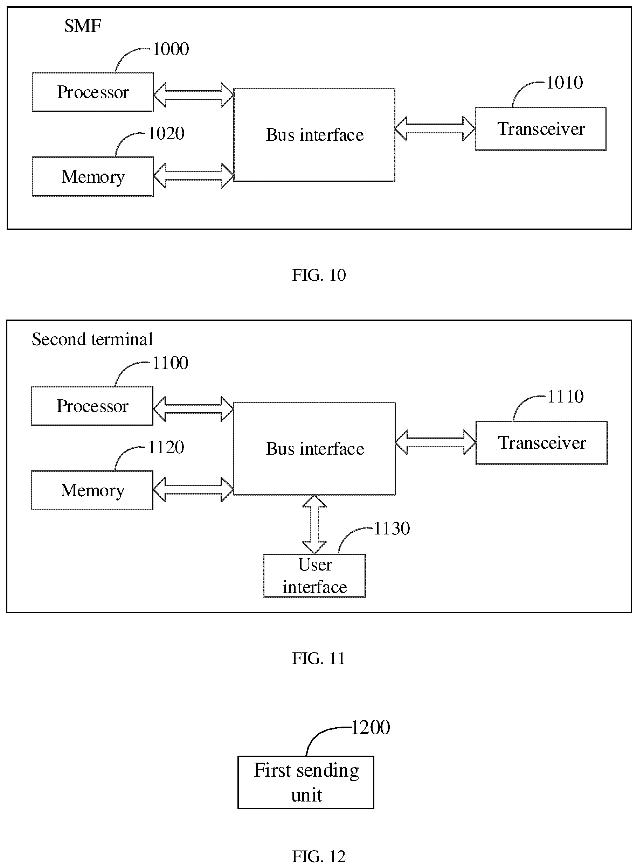

FIG. 10 is a schematic structural diagram of a session management function according to an embodiment of the present application. As shown in FIG. 10, the session management function includes a memory 1020, a transceiver 1010 and a processor 1000. The processor 1000 and the memory 1020 may also be arranged physically separately.

The memory 1020 is used for storing a computer program, and the transceiver 1010 is used for sending and receiving data under control of the processor 1000.

In some embodiments, the transceiver 1010 is used for sending and receiving data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits, etc., which are well known in the art, and therefore are not further described in the present application. A bus interface provides an interface. The transceiver 1010 may include multiple elements, i.e., including a transmitter and a receiver, units for providing communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a CPU, an ASIC, a FPGA or a CPLD, and the processor may also adopt a multi-core architecture.

The processor 1000 is used to perform any of the methods provided by the embodiments of the present application based on an obtained executable instruction by calling the computer program stored in the memory 1020, for example: receiving a first create session management context request message sent from an access and mobility management function, where the first create session management context request message includes an application layer identifier of a first terminal and an application layer identifier of a second terminal, where the first terminal is a terminal that initiates establishment of a multicast group, and the second terminal and the first terminal belong to a same virtual network (VN) group; and
determining, based on the first create session management context request message, that whether the first terminal is allowed to establish a multicast group.

In some embodiments, determining that whether the first terminal is allowed to establish the multicast group based on the first create session management context request message includes:
querying, from a unified data management function, whether the first terminal is allowed to establish the multicast group based on the application layer identifier of the first terminal.

In some embodiments, in case of determining that the first terminal is allowed to establish the multicast group, the method further includes:
sending a first request message to the second terminal, where the first request message is used to request the second terminal to join a target multicast group, where the target multicast group is a multicast group initiated and established through the first terminal.

In some embodiments, the first request message includes the multicast address information of the target multicast group.

In some embodiments, after sending the first request message to the second terminal, the method further includes:
receiving a second create session management context request message or a first update session management context request message sent from an access and mobility management function, where the second create session management context request message or the first update session management context request message includes an application layer identifier of the second terminal and multicast address information of the target multicast group; and
determining, based on the second create session management context request message or the first update session management context request message, that whether the second terminal is allowed to join the target multicast group.

In some embodiments, determining, based on the second create session management context request message or the first update session management context request message, that whether the second terminal is allowed to join the target multicast group includes:
querying, from a unified data management function and/or a policy control function, whether the second terminal is allowed to join the target multicast group based on the second create session management context request message or the first update session management context request message.

In some embodiments, in case of determining that the second terminal is allowed to join the target multicast group, the method further includes:
sending a data matching and transferring rule of the target multicast group to a user plane function on a protocol data unit (PDU) session path of the second terminal.

In some embodiments, the method further includes:
sending a group level session modification request message to a user plane function on a protocol data unit (PDU) session path of the first terminal, where the group level session modification request message includes the data matching and transferring rule of the target multicast group.

In some embodiments, the method further includes:
sending a first PDU session establishment complete message to the first terminal, where the first PDU session establishment complete message includes first information, and the first information is used to indicate whether a network allows the first terminal to establish a multicast group.

In some embodiments, the method further includes:
sending a second PDU session establishment complete message to the second terminal, where the second PDU session establishment complete message includes second information, and the second information is used to indicate whether the second terminal successfully joins the target multicast group.

FIG. 11 is a schematic structural diagram of a second terminal according to an embodiment of the present application. As shown in FIG. 11, the second terminal includes a memory 1120, a transceiver 1110, and a processor 1100. The processor 1100 and the memory 1120 may also be arranged physically separately.

The memory 1120 is used for storing a computer program, and the transceiver 1110 is used for sending and receiving data under control of the processor 1100.

In some embodiments, the transceiver 1110 is used for sending and receiving data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1110 may include multiple elements, i.e., including a transmitter and a receiver, units for providing communication with various other devices over transmission media including wireless channels, wired channels, fiber optic cables, and the like. For different user devices, a user interface 1130 may also be an interface capable of externally or internally connecting required devices, and the connected devices include but are not limited to a small keypad, a display, a speaker, a microphone, a joystick, and the like.

The processor 1110 is responsible for managing the bus architecture and general processing, and the memory 1120 may store data used by the processor 1110 when performing operations.

The processor 1100 may be a CPU, an ASIC, an FPGA or a CPLD, and the processor may also adopt a multi-core architecture.

The processor 1100 is used to perform any of the methods provided by the embodiments of the present application based on an obtained executable instruction by calling the computer program stored in the memory 1120, for example: receiving a first request message, where the first request message is used to request the second terminal to join a target multicast group, where the target multicast group is a multicast group initiated and established through a first terminal, and the first terminal and the second terminal belong to a same virtual network (VN) group; and
sending, based on the first request message, a second protocol data unit (PDU) session establishment request message or a first protocol data unit (PDU) session modification request message, where the second PDU session establishment request message or the first PDU session modification request message includes an application layer identifier of the second terminal and multicast address information of the target multicast group.

In some embodiments, the first request message includes the multicast address information of the target multicast group.

In some embodiments, after sending the second PDU session establishment request message, the method further includes:
receiving a second PDU session establishment complete message, where the second PDU session establishment complete message includes second information, where the second information is used to indicate whether the second terminal successfully joins the target multicast group.

It should be noted that the first terminal, the session management function, and the second terminal provided by the embodiment of the present application can implement all the method steps in the method embodiments and may achieve the same technical effect. The parts and beneficial effects of this embodiment that are the same as those of the method embodiments are not described in detail.

FIG. 12 is a first schematic structural diagram of an apparatus for multicast group establishment according to an embodiment of the present application. As shown in FIG. 12, the apparatus includes:
a first sending unit 1200, used for sending a first protocol data unit (PDU) session establishment request message, where the first PDU session establishment request message includes an application layer identifier of a first terminal and an application layer identifier of a second terminal,
where the second terminal and the first terminal belong to a same virtual network (VN) group.

In some embodiments, the apparatus further includes:
a first receiving unit, used for receiving a first PDU session establishment complete message, where the first PDU session establishment complete message includes first information, and the first information is used to indicate whether a network allows the first terminal to establish a multicast group.

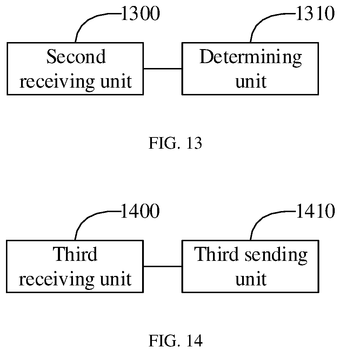

FIG. 13 is a second schematic structural diagram of an apparatus for multicast group establishment according to an embodiment of the present application. As shown in FIG. 13, the apparatus includes:
a second receiving unit 1300, used for receiving a first create session management context request message sent from an access and mobility management function, where the first create session management context request message includes an application layer identifier of a first terminal and an application layer identifier of a second terminal, where the first terminal is a terminal that initiates establishment of a multicast group, and the second terminal and the first terminal belong to a same virtual network (VN) group; and
a determining unit 1310, used for determining, based on the first create session management context request message, that whether the first terminal is allowed to establish a multicast group.

In some embodiments, determining that whether the first terminal is allowed to establish the multicast group based on the first create session management context request message includes:
querying, from a unified data management function, whether the first terminal is allowed to establish the multicast group based on the application layer identifier of the first terminal.

In some embodiments, the apparatus further includes a second sending unit, where the second sending unit is used for:
in case of determining that the first terminal is allowed to establish the multicast group, sending a first request message to the second terminal, where the first request message is used to request the second terminal to join a target multicast group, where the target multicast group is a multicast group initiated and established through the first terminal.

In some embodiments, the first request message includes the multicast address information of the target multicast group.

In some embodiments, the second receiving unit 1300 is further used for:
receiving a second create session management context request message or a first update session management context request message sent from an access and mobility management function, where the second create session management context request message or the first update session management context request message includes an application layer identifier of the second terminal and multicast address information of the target multicast group; and
the determining unit 1310 is further used for:
   determining, based on the second create session management context request message or the first update session management context request message, that whether the second terminal is allowed to join the target multicast group.

In some embodiments, determining, based on the second create session management context request message or the first update session management context request message, that whether the second terminal is allowed to join the target multicast group includes:
querying, from a unified data management function and/or a policy control function, whether the second terminal is allowed to join the target multicast group based on the second create session management context request message or the first update session management context request message.

In some embodiments, the second sending unit is further used for:
sending a data matching and transferring rule of the target multicast group to a user plane function on a protocol data unit (PDU) session path of the second terminal.

In some embodiments, the second sending unit is further used for:
sending a group level session modification request message to a user plane function on a protocol data unit (PDU) session path of the first terminal, where the group level session modification request message includes the data matching and transferring rule of the target multicast group.

In some embodiments, the second sending unit is further used for:
sending a first PDU session establishment complete message to the first terminal, where the first PDU session establishment complete message includes first information, and the first information is used to indicate whether a network allows the first terminal to establish a multicast group.

In some embodiments, the second sending unit is further used for:
sending a second PDU session establishment complete message to the second terminal, where the second PDU session establishment complete message includes second information, and the second information is used to indicate whether the second terminal successfully joins the target multicast group.

FIG. 14 is a third schematic structural diagram of an apparatus for multicast group establishment according to an embodiment of the present application. As shown in FIG. 14, the apparatus includes:
a third receiving unit 1400, used for receiving a first request message, where the first request message is used to request a second terminal to join a target multicast group, where the target multicast group is a multicast group initiated and established through a first terminal, and the first terminal and the second terminal belong to a same virtual network (VN) group; and
a third sending unit 1410, used for sending, based on the first request message, a second protocol data unit (PDU) session establishment request message or a first protocol data unit (PDU) session modification request message, where the second PDU session establishment request message or the first PDU session modification request message includes an application layer identifier of the second terminal and multicast address information of the target multicast group.

In some embodiments, the first request message includes the multicast address information of the target multicast group.

In some embodiments, the third receiving unit 1400 is further used for:
receiving a second PDU session establishment complete message, where the second PDU session establishment complete message includes second information, where the second information is used to indicate whether the second terminal successfully joins the target multicast group.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above-mentioned apparatuses provided by the embodiments of the present application can implement all the method steps in the method embodiments and may achieve the same technical effect. The parts and beneficial effects of this embodiment that are the same as those of the method embodiments are not described in detail.

An embodiment of the present application further provides a computer-readable storage medium, where the computer-readable storage medium stores a computer program, and the computer program is used to cause a computer to perform the method for multicast group establishment provided by the above embodiments.

It should be noted here that the computer-readable storage medium provided by the embodiment of the present application can implement all the method steps in the method embodiments and may achieve the same technical effect. The parts and beneficial effects of this embodiment that are the same as those of the method embodiments are not described in detail.

The computer-readable storage medium may be any available medium or data storage device that may be accessed by a computer, including but not limited to magnetic storage (such as floppy disks, hard disks, magnetic tapes, magneto-optical disks (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

The solutions provided by the embodiments of the present application may be applied to a variety of systems, especially 5th generation mobile communication technology (5G) systems. For example, the applicable systems may include a global system of mobile communication (GSM) system, a code division multiple access (CDMA) system, a wideband code division multiple access (WCDMA), general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network part, such as an evolved packet system (EPS), a 5G system (5GS), etc.

The terminal involved in the embodiments of the present application may be a device that provides voice and/or data connectivity to a user, a handheld device with a wireless connection function, or other processing devices connected to a wireless modem. In different systems, the names of the terminal may also be different. For example, in a 5G system, the terminal may be called a user equipment (UE). A wireless terminal device may communicate with one or more core networks (CNs) via a radio access network (RAN). A wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminals may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for multicast group establishment, performed by a first terminal, comprising:
sending a first protocol data unit, PDU, session establishment request message, wherein the first PDU session establishment request message comprises an application layer identifier of the first terminal and an application layer identifier of a second terminal
wherein the second terminal and the first terminal belong to a same virtual network, VN, group.

2. The method of claim 1, wherein after sending the first PDU session establishment request message, the method further comprises:
receiving a first PDU session establishment complete message, wherein the first PDU session establishment complete message comprises first information, and the first information is used to indicate whether a network allows the first terminal to establish a multicast group.

3. A method for multicast group establishment, performed by a session management function, comprising:
receiving a first create session management context request message sent from an access and mobility management function, wherein the first create session management context request message comprises an application layer identifier of a first terminal and an application layer identifier of a second terminal, wherein the first terminal is a terminal that initiates establishment of a multicast group, and the second terminal and the first terminal belong to a same virtual network, VN, group; and
determining, based on the first create session management context request message, that whether the first terminal is allowed to establish a multicast group.

4. The method of claim 3, wherein determining that whether the first terminal is allowed to establish the multicast group based on the first create session management context request message comprises:
querying, from a unified data management function, whether the first terminal is allowed to establish the multicast group based on the application layer identifier of the first terminal.

5. The method of claim 3 or 4, wherein in case of determining that the first terminal is allowed to establish the multicast group, the method further comprises:
sending a first request message to the second terminal, wherein the first request message is used to request the second terminal to join a target multicast group, wherein the target multicast group is a multicast group initiated and established through the first terminal.

6. The method of claim 5, wherein the first request message comprises the multicast address information of the target multicast group.

7. The method of claim 5 or 6, wherein after sending the first request message to the second terminal, the method further comprises:
receiving a second create session management context request message or a first update session management context request message sent from an access and mobility management function, wherein the second create session management context request message or the first update session management context request message comprises an application layer identifier of the second terminal and multicast address information of the target multicast group; and
determining, based on the second create session management context request message or the first update session management context request message, that whether the second terminal is allowed to join the target multicast group.

8. The method of claim 7, wherein determining, based on the second create session management context request message or the first update session management context request message, that whether the second terminal is allowed to join the target multicast group comprises:
querying, from a unified data management function and/or a policy control function, whether the second terminal is allowed to join the target multicast group based on the second create session management context request message or the first update session management context request message.

9. The method of claim 7 or 8, wherein in case of determining that the second terminal is allowed to join the target multicast group, the method further comprises:
sending a data matching and transferring rule of the target multicast group to a user plane function on a protocol data unit, PDU, session path of the second terminal.

10. The method of claim 9, further comprising:
sending a group level session modification request message to a user plane function on a protocol data unit, PDU, session path of the first terminal, wherein the group level session modification request message comprises the data matching and transferring rule of the target multicast group.

11. The method of claim 3, further comprising:
sending a first protocol data unit, PDU, session establishment complete message to the first terminal, wherein the first PDU session establishment complete message comprises first information, and the first information is used to indicate whether a network allows the first terminal to establish a multicast group.

12. The method of claim 7, further comprising:
sending a second protocol data unit, PDU, session establishment complete message to the second terminal, wherein the second PDU session establishment complete message comprises second information, and the second information is used to indicate whether the second terminal successfully joins the target multicast group.

13. A method for multicast group establishment, performed by a second terminal, comprising:
receiving a first request message, wherein the first request message is used to request the second terminal to join a target multicast group, wherein the target multicast group is a multicast group initiated and established through a first terminal, and the first terminal and the second terminal belong to a same virtual network, VN, group; and
sending, based on the first request message, a second protocol data unit, PDU, session establishment request message or a first protocol data unit, PDU, session modification request message, wherein the second PDU session establishment request message or the first PDU session modification request message comprises an application layer identifier of the second terminal and multicast address information of the target multicast group.

14. The method of claim 13, wherein the first request message comprises the multicast address information of the target multicast group.

15. The method of claim 13 or 14, wherein after sending the second PDU session establishment request message, the method further comprises:
receiving a second PDU session establishment complete message, wherein the second PDU session establishment complete message comprises second information, wherein the second information is used to indicate whether the second terminal successfully joins the target multicast group.

16. A first terminal, comprising a memory, a transceiver and a processor,
wherein the memory is used for storing a computer program, the transceiver is used for receiving and sending data under the control of the processor, and the processor is used for reading the computer program in the memory and performing the following operations:
sending a first protocol data unit, PDU, session establishment request message, wherein the first PDU session establishment request message comprises an application layer identifier of the first terminal and an application layer identifier of a second terminal,
wherein the second terminal and the first terminal belong to a same virtual network, VN, group.

17. The first terminal of claim 16, wherein after sending the first PDU session establishment request message, the operations further comprise:
receiving a first PDU session establishment complete message, wherein the first PDU session establishment complete message comprises first information, and the first information is used to indicate whether a network allows the first terminal to establish a multicast group.

18. A session management function, comprising a memory, a transceiver and a processor,
wherein the memory is used for storing a computer program, the transceiver is used for receiving and sending data under the control of the processor, and the processor is used for reading the computer program in the memory and performing the following operations:
receiving a first create session management context request message sent from an access and mobility management function, wherein the first create session management context request message comprises an application layer identifier of a first terminal and an application layer identifier of a second terminal, wherein the first terminal is a terminal that initiates establishment of a multicast group, and the second terminal and the first terminal belong to a same virtual network, VN, group; and
determining, based on the first create session management context request message, that whether the first terminal is allowed to establish a multicast group.

19. The session management function of claim 18, wherein determining that whether the first terminal is allowed to establish the multicast group based on the first create session management context request message comprises:
querying, from a unified data management function, whether the first terminal is allowed to establish the multicast group based on the application layer identifier of the first terminal.

20. The session management function of claim 18, wherein in case of determining that the first terminal is allowed to establish the multicast group, the operations further comprise:
sending a first request message to the second terminal, wherein the first request message is used to request the second terminal to join a target multicast group, wherein the target multicast group is a multicast group initiated and established through the first terminal.

21. The session management function of claim 20, wherein the first request message comprises the multicast address information of the target multicast group.

22. The session management function of claim 20 or 21, wherein after sending the first request message to the second terminal, the operations further comprise:
receiving a second create session management context request message or a first update session management context request message sent from an access and mobility management function, wherein the second create session management context request message or the first update session management context request message comprises an application layer identifier of the second terminal and multicast address information of the target multicast group; and
determining, based on the second create session management context request message or the first update session management context request message, that whether the second terminal is allowed to join the target multicast group.

23. The session management function of claim 22, wherein determining, based on the second create session management context request message or the first update session management context request message, that whether the second terminal is allowed to join the target multicast group comprises:
querying, from a unified data management function and/or a policy control function, whether the second terminal is allowed to join the target multicast group based on the second create session management context request message or the first update session management context request message.

24. The session management function of claim 22, wherein in case of determining that the second terminal is allowed to join the target multicast group, the operations further comprise:
sending a data matching and transferring rule of the target multicast group to a user plane function on a protocol data unit, PDU, session path of the second terminal.

25. The session management function of claim 24, wherein the operations further comprise:
sending a group level session modification request message to a user plane function on a protocol data unit, PDU, session path of the first terminal, wherein the group level session modification request message comprises the data matching and transferring rule of the target multicast group.

26. The session management function of claim 18, wherein the operations further comprise:
sending a first protocol data unit, PDU, session establishment complete message to the first terminal, wherein the first PDU session establishment complete message comprises first information, and the first information is used to indicate whether a network allows the first terminal to establish a multicast group.

27. The session management function of claim 22, wherein the operations further comprise:
sending a second protocol data unit, PDU, session establishment complete message to the second terminal, wherein the second PDU session establishment complete message comprises second information, and the second information is used to indicate whether the second terminal successfully joins the target multicast group.

28. A second terminal, comprising a memory, a transceiver and a processor,
wherein the memory is used for storing a computer program, the transceiver is used for receiving and sending data under the control of the processor, and the processor is used for reading the computer program in the memory and performing the following operations:
receiving a first request message, wherein the first request message is used to request the second terminal to join a target multicast group, wherein the target multicast group is a multicast group initiated and established through a first terminal, and the first terminal and the second terminal belong to a same virtual network, VN, group; and
sending, based on the first request message, a second protocol data unit, PDU, session establishment request message or a first protocol data unit, PDU, session modification request message, wherein the second PDU session establishment request message or the first PDU session modification request message comprises an application layer identifier of the second terminal and multicast address information of the target multicast group.

29. The second terminal of claim 28, wherein the first request message comprises the multicast address information of the target multicast group.

30. The second terminal of claim 28, wherein after sending the second PDU session establishment request message, the operations further comprise:
receiving a second PDU session establishment complete message, wherein the second PDU session establishment complete message comprises second information, wherein the second information is used to indicate whether the second terminal successfully joins the target multicast group.

31. An apparatus for multicast group establishment, comprising:
a first sending unit, used for sending a first protocol data unit, PDU, session establishment request message, wherein the first PDU session establishment request message comprises an application layer identifier of a first terminal and an application layer identifier of a second terminal,
wherein the second terminal and the first terminal belong to a same virtual network, VN, group.

32. The apparatus of claim 31, further comprising:
a first receiving unit, used for receiving a first PDU session establishment complete message, wherein the first PDU session establishment complete message comprises first information, and the first information is used to indicate whether a network allows the first terminal to establish a multicast group.

33. An apparatus for multicast group establishment, comprising:
a second receiving unit, used for receiving a first create session management context request message sent from an access and mobility management function, wherein the first create session management context request message comprises an application layer identifier of a first terminal and an application layer identifier of a second terminal, wherein the first terminal is a terminal that initiates establishment of a multicast group, and the second terminal and the first terminal belong to a same virtual network, VN, group; and
a determining unit, used for determining, based on the first create session management context request message, that whether the first terminal is allowed to establish a multicast group.

34. The apparatus of claim 33, wherein determining that whether the first terminal is allowed to establish the multicast group based on the first create session management context request message comprises:
querying, from a unified data management function, whether the first terminal is allowed to establish the multicast group based on the application layer identifier of the first terminal.

35. The apparatus of claim 33 or 34, further comprising a second sending unit, wherein the second sending unit is used for:
in case of determining that the first terminal is allowed to establish the multicast group, sending a first request message to the second terminal, wherein the first request message is used to request the second terminal to join a target multicast group, wherein the target multicast group is a multicast group initiated and established through the first terminal.

36. The apparatus of claim 35, wherein the first request message comprises the multicast address information of the target multicast group.

37. The apparatus of claim 35 or 36, wherein
the second receiving unit is further used for: receiving a second create session management context request message or a first update session management context request message sent from an access and mobility management function, wherein the second create session management context request message or the first update session management context request message comprises an application layer identifier of the second terminal and multicast address information of the target multicast group; and
the determining unit is further used for: determining, based on the second create session management context request message or the first update session management context request message, that whether the second terminal is allowed to join the target multicast group.

38. The apparatus of claim 37, wherein determining, based on the second create session management context request message or the first update session management context request message, that whether the second terminal is allowed to join the target multicast group comprises:
querying, from a unified data management function and/or a policy control function, whether the second terminal is allowed to join the target multicast group based on the second create session management context request message or the first update session management context request message.

39. The apparatus of claim 37 or 38, wherein the second sending unit is further used for:
in case of determining that the second terminal is allowed to join the target multicast group, sending a data matching and transferring rule of the target multicast group to a user plane function on a protocol data unit, PDU, session path of the second terminal.

40. The apparatus of claim 39, wherein the second sending unit is further used for:
sending a group level session modification request message to a user plane function on a protocol data unit, PDU, session path of the first terminal, wherein the group level session modification request message comprises the data matching and transferring rule of the target multicast group.

41. The apparatus of claim 33, wherein the second sending unit is further used for:
sending a first protocol data unit, PDU, session establishment complete message to the first terminal, wherein the first PDU session establishment complete message comprises first information, and the first information is used to indicate whether a network allows the first terminal to establish a multicast group.

42. The apparatus of claim 37, wherein the second sending unit is further used for:
sending a second protocol data unit, PDU, session establishment complete message to the second terminal, wherein the second PDU session establishment complete message comprises second information, and the second information is used to indicate whether the second terminal successfully joins the target multicast group.

43. An apparatus for multicast group establishment, comprising:
a third receiving unit, used for receiving a first request message, wherein the first request message is used to request a second terminal to join a target multicast group, wherein the target multicast group is a multicast group initiated and established through a first terminal, and the first terminal and the second terminal belong to a same virtual network, VN, group; and
a third sending unit, used for sending, based on the first request message, a second protocol data unit, PDU, session establishment request message or a first protocol data unit, PDU, session modification request message, wherein the second PDU session establishment request message or the first PDU session modification request message comprises an application layer identifier of the second terminal and multicast address information of the target multicast group.

44. The apparatus of claim 43, wherein the first request message comprises the multicast address information of the target multicast group.

45. The apparatus of claim 43 or 44, wherein the third receiving unit is further used for:
receiving a second PDU session establishment complete message, wherein the second PDU session establishment complete message comprises second information, wherein the second information is used to indicate whether the second terminal successfully joins the target multicast group.

46. A computer-readable storage medium, wherein the computer-readable storage medium stores a computer program, and the computer program is used to cause a computer to perform the method of any of claims 1 to 2, or the method of any of claims 3 to 12, or the method of any of claims 12 to 15.
